# EUROPÄISCHE PATENTANMELDUNG

(11) **EP 1 980 878 A1**
(43) Veröffentlichungstag der Anmeldung: **15.10.2008**
(21) Anmeldenummer: 08102935.7
(22) Anmeldetag: 26.03.2008
(51) Int. Cl.: G01V 8/12

(54) **Optoelektronischer Sensor mit verbundener Doppellinse und Herstellungsverfahren hierfür**

(30) Priorität: 13.04.2007 DE 102007017909
(71) Anmelder: SICK AG, 79183 Waldkirch (DE)
(72) Erfinder: Buser, Roger, 79106 Freiburg (DE); Borchardt, Martin, 79183 Waldkirch (DE); Allgeier, Jürgen, 79183 Waldkirch (DE)
(74) Vertreter: Hehl, Ulrich

(57) **Zusammenfassung**

Es wird ein optoelektronischer Sensor (10) mit einem Lichtsender (20) und einem hierzu in festem Abstand (40) angeordneten Lichtempfänger (22) sowie mit einer ersten Linse (24), die dem Lichtsender (20), und mit einer zweiten Linse (26), die dem Lichtempfänger (22) vorgeordnet ist, angegeben. Dabei sind die erste Linse (24) und die zweite Linse (26) miteinander zu einer Doppellinse (50) verbunden, um einen festen Abstand zueinander sicherzustellen.

Es wird weiterhin ein Herstellungsverfahren für einen solchen Sensor angegeben.

## Beschreibung

Die Erfindung betrifft einen optoelektronischen Sensor mit verbundener Doppellinse nach dem Oberbegriff von Anspruch 1 und ein Herstellungsverfahren hierfür.

Optoelektronische Sensoren werden für eine Vielzahl von Überwachungsaufgaben eingesetzt. Beispiele solcher Sensoren sind Lichttaster oder Reflexionslichtschranken, bei denen ein Lichtsender einen Lichtstrahl aussendet, der reflektiert und von einem neben dem Lichtsender angeordneten Lichtempfänger aufgefangen wird. Ein anderer Sensortyp ist ein Lichtgitter, bei dem eine Reihe von Lichtsender/Lichtempfängerpaaren nebeneinander angeordnet sind und eine Art Lichtvorhang bilden.

Eine weitere Anwendung der genannten Sensoren ist die optische Bestimmung einer Entfernung nach dem Prinzip des Lichtlaufzeitverfahrens. Ein dem Lichtstrahl aufgeprägtes Sendemuster wird von einem Objekt reflektiert und nach Empfang in dem Sensor mit einem intern erzeugten Referenzmuster verglichen. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine entfernungsmessende Reflexionslichtschranke, bei welcher der Abstand zwischen Lichtsender und Reflektor überwacht wird.

Bei allen genannten Sensoren ist dem Lichtsender und dem Lichtempfänger jeweils eine Optik zugeordnet, und diese Optik muss richtig justiert sein. Besonders bei Abstandsmessungen mit einem Laser als Lichtsender wird herkömmlich eine Justage im Produktionsumfeld durchgeführt. Dies soll eine bestimmte Fokuslage oder einen Laserspotdurchmesser einstellen. Zusätzlich kann es in einem zweiten Schritt erforderlich sein, den Sender und den Empfänger zueinander auszurichten. Im Ergebnis soll diese Justierung in allen Fällen die Lage von Lichtsender, Lichtempfänger und den beiden Linsen untereinander festlegen.

Solange der Lichtempfänger und/oder der Lichtspot verhältnismäßig groß ist, muss auch die Justierung nicht allzu genau sein. Mit zunehmender Miniaturisierung werden die Anforderungen an die Justierung aber erhöht. Das im Stand der Technik übliche Verfahren, den Empfänger als Chip auf eine Platine aufzusetzen, wird dann irgendwann zu ungenau.

In jedem Fall ist die Herstellung oder, wenn die Justierung erst im Produktionsumfeld durchgeführt wird, die Montage aufwändig, kostentreibend, unkomfortabel und kann, wenn der Sensor sich gar nicht mehr richtig justieren lässt, auch zu Ausschuss führen.

Es ist daher Aufgabe der Erfindung, einen Sensor, der einen möglichst geringen Justageaufwand erfordert, und außerdem ein vereinfachtes Herstellungsverfahren für einen richtig justierten Sensor anzugeben.

Diese Aufgabe wird durch einen Sensor gemäß Anspruch 1 und ein Herstellungsverfahren gemäß Anspruch 13 gelöst. Der erfindungsgemäße Sensor hat den Vorteil, dass der Abstand zwischen den beiden Linsen kein freier Parameter des Systems ist, sondern bereits bei Herstellung mit äußerst geringen Toleranzen festliegt. Der Justageaufwand ist auf diese Weise erheblich reduziert. Weiterhin sorgt die Verbindung zwischen den beiden Linsen dafür, dass sie nur gemeinsam beweglich sind und somit ein lateraler Versatz für die Justierung keine Rolle spielt: durch einen solchen Versatz verschiebt sich zwar der Auftreffpunkt des Lichtsenders, da aber die Linse des Lichtempfängers dieselbe Bewegung vollzieht, bleibt der Auftreffpunkt automatisch im Sichtbereich des Lichtempfängers.

Das erfindungsgemäße Herstellungsverfahren sorgt auf einfache Weise dafür, dass die Basisabstände zwischen Lichtsender und Lichtempfänger einerseits und zwischen den beiden zugeordneten Linsen andererseits festgelegt ist. Es ist damit eine einfache Herstellung angegeben, einen richtig justierten Sensor zu erhalten.

Bevorzugt sind Lichtsender und Lichtempfänger auf einer gemeinsamen Platine angeordnet. Auf diese Weise haben Lichtsender und Lichtempfänger einen wohldefinierten Abstand zueinander, der eine sehr geringe Toleranz aufweist.

Noch bevorzugter ist die Geometrie eines Pads der Platine für den Lichtsender und/oder den Lichtempfänger möglichst klein gewählt. Je kleiner diese Geometrie gewählt ist, umso geringer ist die Toleranz der Position von Lichtsender und Lichtempfänger auf der Platine und somit die Toleranz ihres Abstands zueinander. Damit ist, nach dem Abstand von erster Linse zu zweiter Linse, ein zweiter wichtiger Parameter praktisch festgelegt, ohne dass ein eigener Justierschritt erforderlich ist.

Vorteilhafterweise ist die Doppellinse einstückig, insbesondere ein gemeinsames Spritzteil. Dies vereinfacht nicht nur die Herstellung, es schafft auch eine Verbindung zwischen erster und zweiter Linse, die den Abstand der Linsen zueinander festgelegt.

Bevorzugt ist die Doppellinse vergütet, also mit einer Beschichtung versehen, insbesondere einer Metalloxidschicht. Damit wird verhindert, dass beim Übergang Linse-Luft durch Reflexionen innerhalb der Linse Streulicht entsteht.

Bevorzugt weisen die erste und zweite Linse eine gleiche Brennweite auf. Wenn die Doppellinse dann in einer Ebene parallel zur Ebene von Lichtsender und Lichtempfänger liegt, so ist die gesamte Justierung vollzogen, da alle Abstandparameter automatisch richtig gewählt sind.

In einer besonderen Ausführungsform ist die Verbindung zwischen erster und zweiter Linse aufgeraut und/oder zumindest teilweise mit einem lichtundurchlässigen Material überzogen. Die erste Maßnahme sorgt dafür, dass die Verbindung nicht lichtleitend ist. Mit der zweiten Maßnahme wird dann der Austritt von Licht aus dem Verbindungsbereich verhindert. In dieser Weise wird ein optisches Übersprechen vom Sendekanal auf den Empfangskanal hinreichend gedämpft. Da der Pegel von Lichtsender und Lichtempfänger sich in einem realistischen System um einen Faktor 10⁷ unterscheidet, kann optisches Übersprechen auch mit einem geringen Anteil die Auswertung erheblich erschweren oder sogar unmöglich machen.

In Weiterbildung der Erfindung ist ein lichtundurchlässiger Trennsteg zwischen erster und zweiter Linse vorgesehen, welcher Öffnungen für die Verbindung der Doppellinse aufweist, wobei die Verbindung insbesondere auf einem lichtundurchlässigen Material aufliegt. Auch hiermit wird das optische Übersprechen verringert. Im Bereich des Trennstegs kann kein Licht vom Sendekanal zum Empfangskanal gelangen. Indem die Verbindung auf einem lichtundurchlässigen Material aufliegt, kann in dieser Richtung auch kein Licht aus der Verbindung heraus in den Empfängern gestrahlt werden.

Dabei ist besonders bevorzugt der Trennsteg bis an eine Frontscheibe geführt und mit der Frontscheibe verschweißt oder verklebt. Die optische Trennung von Sendekanal und Empfangskanal könnte nämlich andernfalls unvollständig sein, weil Licht an der Frontscheibe einfach oder mehrfach reflektiert wird und wie von einem Lichtleiter geführt, übertritt. Indem Trennsteg und Frontscheibe optisch dicht untereinander verbunden sind, kann an dieser Stelle kein optisches Übersprechen stattfinden.

In einer vorteilhaften Weiterbildung nimmt ein Trägerkörper des Sensors den Lichtsender und den Lichtempfänger oder deren Leiterplatte sowie die Doppellinse auf. Der Trägerkörper sorgt damit für die richtige Lage von Lichtsender und Lichtempfänger einerseits und Doppellinse andererseits. Auch hiermit wird ein weiterer Justierungsschritt praktisch ohne Aufwand vollzogen, denn die Ebene von Lichtsender und Lichtempfänger sowie die Ebene der Doppellinse ist auf diese Weise richtig beabstandet.

Dabei hält besonders bevorzugt der Trägerkörper die Doppellinse drehfest, insbesondere indem eine Referenzfläche der Doppellinse fest an einer Fläche des Trägerkörpers anliegt und der Trägerkörper eine Presskraft auf die Doppellinse gegen die Referenzfläche ausübt. Im Gegensatz zu einer lateralen Bewegung der Doppellinse, die wegen der gleichzeitigen Verschiebung von Sichtbereich und Sendestrahl für die Justierung keine Rolle spielt, würde mit Drehung der Linse zugleich der Sendekanal und der Empfangskanal aus der richtigen Lage gedreht, und somit entsteht sogar ein doppelter Störeffekt.

Vorteilhafterweise sind in dem Trägerkörper Anschlagpunkte und Positionierzungen vorgesehen, deren Spannung die eingesetzte Doppellinse in einer vorgegebenen Position gegen die Referenzfläche drückt, und/oder mindestens eine flexible Schnapplasche legt die Doppellinse zusätzlich in einer Höhenrichtung fest. Wird die Linse in einen derart ausgestalteten Trägerkörper eingesetzt, so ist ohne Aufwand deren drehfeste Lage sichergestellt. Andererseits fixiert die Schnapplasche auch den einzigen noch bestehenden Freiheitsgrad, nämlich die Höhe. Die Justierung ist damit vollständig.

In einer besonderen Ausführungsform ist der Sensor ein Entfernungsmesser, der eine Entfernung zu einem Objekt aus der Lichtlaufzeit von dem Objekt reflektierten oder remittierten Lichts des Lichtsenders zu dem Lichtempfänger bestimmen kann. Bei dieser Art von Sensor kommt es, gerade wenn er klein gebaut ist, in besonderem Maße auf die richtige Justierung an.

Bei dem erfindungsgemäßen Herstellungsverfahren ist besonders vorteilhaft, wenn die Doppellinse als einstückiges Spritzteil gegossen wird. Dies ist eine kostengünstige Herstellungsmöglichkeit, welche die Form und insbesondere den Abstand der beiden Linsen zueinander sicherstellt.

Weiterhin ist es für das Herstellungsverfahren vorteilhaft, wenn die Platine auf einen Trägerkörper geschraubt und die Linse in den Trägerkörper eingesetzt wird. Somit gibt der Trägerkörper die Lage der zu justierenden optischen Teile vor, ohne dass bei der Herstellung besondere Maßnahmen ergriffen werden müssten. Die Herstellung ist deshalb einfach und produziert nur sehr geringen Ausschuss.

Dabei wird bevorzugt die Doppellinse in einer Ebene des Trägerkörpers mit Anschlagpunkten an einer Referenzfläche ausgerichtet und mit Positionierzungen gegen die Referenzfläche gedrückt und/oder in einer Höhenrichtung mit Schnapplaschen festgelegt und anschließend in der so justierten Lage fixiert, insbesondere mit einem UV-Klebstoff. Die Doppellinse liegt damit aufgrund einfacher und nicht fehleranfälliger Herstellungsschritte drehfest und schließlich auch fixiert in der richtigen Höhenlage.

Vorteilhafterweise wird eine gemeinsame Frontscheibe des Sensors für Lichtaustritt aus dem Lichtsensor und Lichteintritt zu dem Lichtempfänger zunächst auf Richtungsgeber eines Trennstegs des Trägerkörpers aufgelegt und später das Material des Richtungsgebers mit der Frontscheibe ultraschallverschweißt, um eine optisch dichte Verbindung zwischen Trennsteg und Frontscheibe zu schaffen. Eine zweiteilige Frontscheibe wäre eine teure Alternative, da mehrere Teile gebraucht und durch deren Anbringung ein weiterer Herstellungsschritt erforderlich wäre. Erfindungsgemäß ist ein optisch dichter Abschluss durch schlichtes Auflegen der Frontscheibe mit einem einzigen anschließenden Schweißschritt gewährleistet.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung einer Ausführungsform des erfindungsgemäßen Sensors und dessen Überwachungsbereichs;
- Fig. 2: eine Draufsicht auf eine sehr vereinfachte erfindungsgemäße gemeinsame Platine mit Lichtsender und Lichtempfänger;
- Fig. 3: eine weitere Schnittdarstellung die Ausführungsform gemäß Figur 1 entlang der dort eingezeichneten Linie III-III;
- Fig. 4a: eine Draufsicht auf eine Frontscheibe für einen Sensor;
- Fig. 4b: eine Schnittdarstellung durch eine aufgelegte Frontscheibe gemäß Figur 4 entlang der dort eingezeichneten Linie IVb-IVb;
- Fig. 4c: die Darstellung gemäß Figur 4b nach Herstellung einer Ultraschallverbindung mit einem beispielhaften Lichtverlauf zu Illustration des verringerten optischen Übersprechens;
- Fig. 5: eine dreidimensionale Ansicht des Trägerkörpers einer weiteren Ausführungsform der Erfindung;
- Fig. 6a: eine dreidimensionale Ausschnittsdarstellung zur Erläuterung der Positionierung einer Doppellinse in X-Richtung;
- Fig. 6b: eine Figur 6a entsprechende Ausschnittsdarstellung zur Erläuterung der Positionierung einer Doppellinse in Z-Richtung; und
- Fig. 7: eine dreidimensionale Darstellung einer verbundenen Doppellinse aus der Draufsicht.

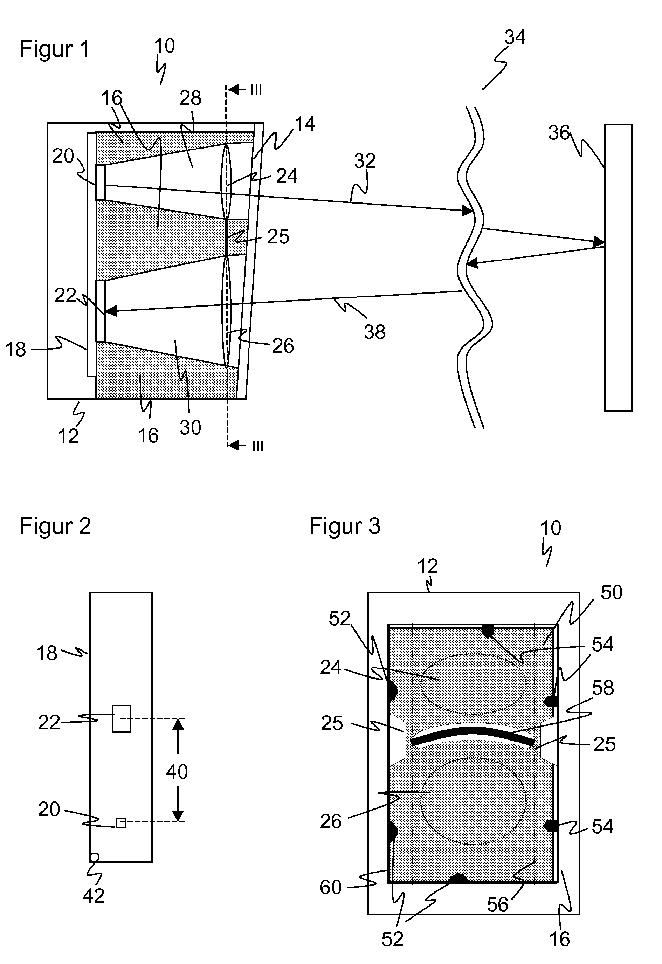

Figur 1 zeigt in einer Schnittdarstellung eine erfindungsgemäße Ausführungsform eines Sensors 10. In einem schützenden äußeren Gehäuse 12 mit einer lichtdurchlässigen Frontscheibe 14. An einer Seitenfläche ist ein Trägerkörper 16 für die elektronischen und optischen Teile des Sensors 10 angebracht. Der Trägerkörper 16 ist nur in der Schnittdarstellung dreiteilig, in einer Ebene unterhalb und oberhalb der Papierebene wird er zu einem gemeinsamen Bauteil zusammengeführt. Mit dem Trägerkörper 16 ist eine Leiterplatte oder Platine 18 fest verbunden. Die Verbindung wird bevorzugt mit Schrauben realisiert. Die Platine 18 ist mit einem Lichtsender 20 und einen Lichtempfänger 22 bestückt.

Als Lichtsender 20 ist in dieser Ausführungsform eine Laserdiode eingesetzt. Grundsätzlich ist auch eine Leuchtdiode denkbar, diese erfordert aber mit einer Abstrahlfläche von 200-400 µm im Gegensatz zu einem Laser mit einer Abstrahlfläche von weniger als 25 µm nur eine vergleichsweise ungenaue Justierung, so dass die Vorteile der Erfindung nur mit einer Laserdiode voll zum Tragen kommen. Als Lichtempfänger 22 kann beispielsweise eine Photodiode eingesetzt werden.

Die dargestellte Ausführungsform mit einer gemeinsamen Platine für Lichtsender 20 und Lichtempfänger 22 ist bevorzugt, weil der Basisabstand auf diese Weise festgelegt ist. Dennoch ist in einer alternativen Ausführungsform denkbar, jeweils eine Platine für den Lichtsender 20 und eine Platine für den Lichtempfänger 22 vorzusehen und den Basisabstand durch jeweilige Verbindung mit dem Trägerkörper 16 festzulegen.

Dem Lichtsender 20 und dem Lichtempfänger 22 ist jeweils eine Linse 24, 26 zugeordnet, die von dem Trägerkörper 16 im richtigen Abstand gehalten wird. Der Trägerkörper 16 legt die Linsen 24, 26 somit in einer Ebene parallel zu der Ebene von Lichtsender 20 und Lichtempfänger 22 fest. Um richtig zu fokussieren, haben die Linsen 24, 26 deshalb zumindest annähernd die gleichen Brennweiten.

Die Linsen 24 und 26 sind keine einzelnen Linsen, sondern bilden eine Doppellinse und sind durch einen Verbindungsbereich 25 mechanisch miteinander gekoppelt. Die Doppellinse 24, 26 ist in der hier beschriebenen Ausführungsform einstückig.

Die Linsen 24 und 26 sind vergütet, um Störlicht zu verringern. Ohne Vergütung tritt besonders bei dem durch Linse 26 annähernd parallel ausgesandten Licht ein Störlichtanteil in einer Keule oder einem Kegel um die beabsichtigte Strahlrichtung auf. Trifft dieses Störlicht auf ein helles, nahes Objekt außerhalb des eigentlichen Überwachungsobjekts 36, so kann das Störlicht in einem den Empfang in hohem Maße beeinträchtigenden Pegel in den Empfänger 22 remittiert werden. Die Vergütung, also eine Beschichtung mit einem Material wie einem Metalloxid, verhindert oder verringert die Reflexion am Übergang Linse-Luft.

Hohlräume in den Trägerkörper 16 bilden jeweils einen Tubus 28 für den Lichtsender 20 und einem weiteren Tubus 30 für den Lichtempfänger 22, in denen die Linsen 24 und 26 angeordnet sind.

Der Sensor 10 strahlt Licht aus dem Lichtsender 20 entlang eines Sendestrahls 32 über die Linse 24 und die Frontscheibe 14 in einen Überwachungsbereich 34, wo der Lichtstrahl 32 von einem Objekt 36 reflektiert oder remittiert wird und als Empfangsstrahl 38 erneut durch die Frontscheibe 14 tritt und von der Linse 26 in den Lichtempfänger 22 gelenkt wird.

Der Sensor 10 kann in einer Anwendung erkennen, ob der Lichtstrahl 32, 38 unterbrochen ist und daraus auf die Anwesenheit eines Objekts im Überwachungsbereich 34 schließen. In einer anderen Anwendung kann der Sensor 10 als Entfernungsmesser ausgelegt sein, der die Lichtlaufzeit von Lichtsender 20 zu Lichtempfänger 22 misst. Aus der Lichtlaufzeit kann auf die Entfernung des Objekts 36 geschlossen werden.

Figur 2 zeigt die Leiterplatte 18 noch einmal isoliert in der Draufsicht. Hier und im Folgenden bezeichnen gleiche Bezugszeichen gleiche Merkmale. Ein wichtiger Parameter für die Justierung des Sensors 10 ist der Basisabstand zwischen Lichtsender 20 und Lichtempfänger 22. Durch die gemeinsame Platine hängt die Präzision, mit der dieser Basisabstand eingestellt werden kann, nur noch von der Fertigungstechnik ab. Eine spätere Justage ist nicht erforderlich.

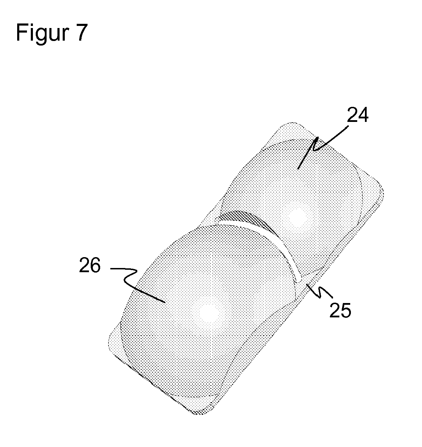

In Figur 3 ist der Sensor 10 in einer weiteren Schnittperspektive dargestellt, die in Figur 1 durch die gestrichelte Linie III-III angedeutet ist. Die Doppellinse 50 ist nur als vereinfachter Block dargestellt, in denen gestrichelte Kreise die Lage der Linsen 24 und 26 andeuten. Die dreidimensionale Gestalt der Doppellinse geht aus der flachen Darstellung nicht hervor, hierzu wird auf die spätere dreidimensionale Darstellung der Figur 7 verwiesen.

Die beiden Bereiche der Doppellinse 50, welche die erste Linse 24 und die zweite Linse 26 bilden, sind nur durch den dünnen Verbindungsbereich 25 mechanisch verbunden. Da aber der Sendepegel um bis zu sieben Dekaden höher ist als der Empfangspegel, muss auch das optische Übersprechen in diesem kleinen Verbindungsbereich 25 sicher unterdrückt werden.

Dazu ist einmal der Verbindungsbereich 25 aufgeraut, damit er nicht lichtleitend ist. Weiterhin liegt der Verbindungsbereich 25 auf lichtundurchlässigem Material des Trägerkörpers 16 auf, so dass auch in Richtung zum Lichtempfänger 22 austretendes Streulicht absorbiert wird. Diese Auflagebereiche des Trägerkörpers 16 sind durch gestrichelte Linien 56 dargestellt. Zusätzlich zu diesen Maßnahmen ist der Verbindungsbereich 25 noch mit einem lichtundurchlässigen Material überzogen. Eine besonders einfache Möglichkeit hierfür ist, den Verbindungsbereich 25 mit einem lichtundurchlässigen Kleber auf dem Trägerkörper 16 im durch Linien 56 abgegrenzten Auflagebereich aufzukleben.

In dem Bereich, in dem die beiden Teillinsen 24 und 26 der Doppellinse 50 nicht verbunden sind, ist ein Trennsteg 58 des Trägerkörpers 16 aus lichtundurchlässigen Material vorgesehen. Über die gesamte Breite dieses Trennsteg 58 ist also kein optisches Übersprechen möglich.

Die Doppellinse 50 muss sich innerhalb des Trägerkörpers 16 in der richtigen Lage zu Lichtsender 20 und Lichtempfänger 22 befinden. Dabei ist eine laterale Verschiebung für die Justierung weitgehend unerheblich. Zwar würde der Sendestrahl 32 des Lichtsenders 20 in dem Überwachungsbereich 34 verschoben, da die beiden Linsen 24, 26 aber mechanisch gekoppelt sind, verschiebt sich im gleichen Maße auch der Empfangsbereich des Lichtempfängers 22 und sieht daher auch den verschobenen Empfangslichtstrahl 36.

Wichtig ist dagegen, die Doppellinse 50 drehfest zu haltern. Bei einer Drehung vollzieht nicht nur Linse 26 die Bewegung der Linse 24 nicht mit, sie bewegt sich sogar in der umgekehrten Richtung, womit ein verdoppelter Störeffekt auftritt. Deshalb ist an der Doppellinse 50 eine Referenzfläche 60 vorgesehen, die in engem Kontakt mit der entsprechenden Referenzfläche des Trägerkörpers 16 kommen muss.

Dazu sind in dem Trägerkörper 16 und/oder an der Doppellinse 50 entsprechende Anschlagpunkte und Anschlagsflächen 52 vorgesehen. Diese bestimmen die richtige Lage der Doppellinse 50 an dem Trägerkörper 16. Außerdem sorgen Positionierzungen 54, die vorgespannt sein können, für einen Druck auf die Doppellinse 50, so dass sie in Richtung der Referenzfläche 50 gedrückt wird und deshalb dort eng anliegt.

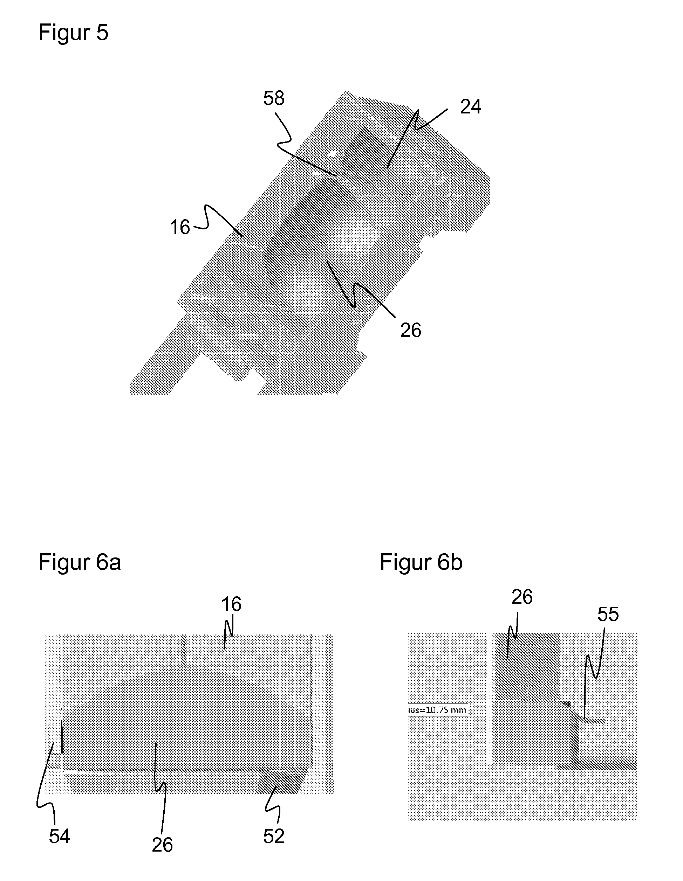

In der in Figur 6b dargestellten Z-Richtung erfolgt die Positionierung durch eine Anschlagfläche mit zwei zugehörigen flexiblen Schnapplaschen 55. Nachdem somit die Positionierung in allen drei Dimensionen abgeschlossen ist, wird die Doppellinse 50 mit Hilfe eines UV-Klebstoffs endgültig fixiert, um die mechanische und thermische Stabilität zu gewährleisten.

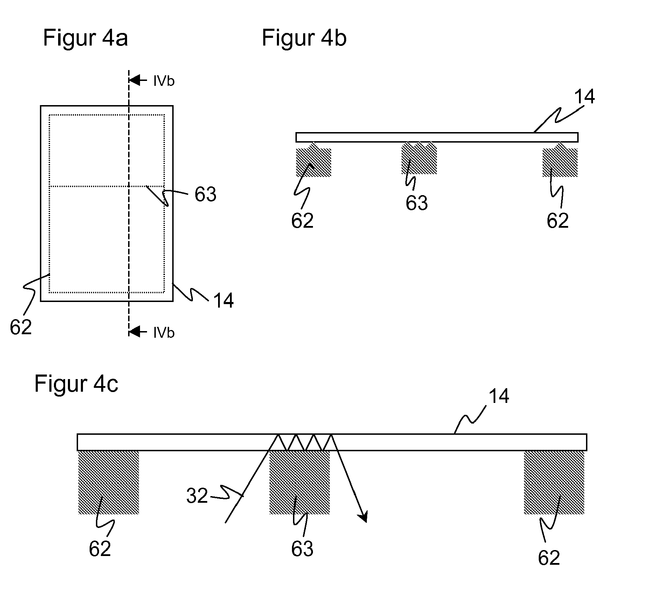

Anhand der Figuren 4a-c wird eine weitere Maßnahme zur Reduzierung des optischen Übersprechens erläutert. Figur 4a ist eine Draufsicht auf die Frontscheibe 14, die auf Richtungsgebern 62, 63 des Trägerkörpers 16 aufliegt. Figur 4b ist eine Querschnittdarstellung entlang der Linie IVb-IVb der Figur 4a und zeigt, dass die Frontscheibe 14 zunächst nur lose auf den Richtungsgebern 62, 63 auf.

Durch Ultraschallschweißen wird derjenige Anteil des Materials der Richtungsgeber 62, 63 verschmolzen, der die Frontscheibe 14 kontaktiert, so dass eine feste Verbindung zwischen dem Trägerkörper 16 und der Frontscheibe 14 entsteht. Diese Verbindung ist optisch dicht, weil der Trägerkörper 16 einschließlich des Bereichs der Richtungsgeber 62, 63 lichtundurchlässig sind.

Figur 4c erläutert die Situation, nachdem das Ultraschallschweißen abgeschlossen ist. Solange der Trennsteg 58 vor dem Ultraschallschweißen, oder ohne einen solchen Schritt, nur an der Frontscheibe 14 anliegt, befindet sich dort eine optische Leckstelle. Einfach oder mehrfach reflektiertes Licht kann über die Frontscheibe 14 oder diese Lücke vom Sendekanal unmittelbar in den Empfangskanal gelangen. Die Frontscheibe 14 wirkt effektiv als Lichtleiter für das optische Übersprechen.

Nach dem Ultraschallschweißen ist dieses Leck optisch abgedichtet. Der Sendelichtstrahl 32 könnte nun nur noch nach mehreren Totalreflexionen an der Grenzfläche Glas-Kunststoff von Frontscheibe 14 zum Trägerkörper 16 vom Sendekanal in den Empfangskanal gelangen. Der transmittierte Anteil wird jeweils vom Richtungsgeber 63 des Trennstegs 58 absorbiert.

Der Trennsteg 58 muss nicht sehr breit sein, damit der Sendestrahl 32 sich durch die Totalreflexion und Absorption hinreichend abschwächt und somit das optische Übersprechen genügend abgedämpft ist. Durch die besondere Anbringung der Frontscheibe 14 an den Trennsteg 58 kann also dieser Trennsteg 58 besonders dünn ausgeführt werden.

In den Figuren 5, 6a und 6b ist eine besondere Ausführungsform des erfindungsgemäßen Trägerkörpers 16 und die Positionierung der Doppellinse 50 in diesem Trägerkörper 16 dreidimensional dargestellt. Die Positionierung wurde bereits im Zusammenhang mit Figur 3 beschrieben.

Figur 7 schließlich zeigt eine Ausführungsform der erfindungsgemäßen Doppellinse 50 in dreidimensionaler Darstellung. Dabei wird besonders eine mögliche Struktur und Anordnung des Verbindungsbereichs 25 erkennbar.

Zur Herstellung des erfindungsgemäßen Sensors 10 wird zunächst der Lichtsender 20 auf eine gemeinsame Platine 18 geklebt. In wohldefiniertem Basisabstand 40 zum Lichtsender 20 wird der Lichtempfänger 22 aufgelötet. Dabei wird eine möglichst kleine Padgeometrie gewählt, um dem Lichtempfänger 22 möglichst wenig Raum für Toleranzen im Basisabstand 40 zum Lichtsender 20 zu geben. Die Bestückung der Platine 18 wird am Prozessband unmittelbar überwacht, um Toleranzen zu minimieren und die Ausbeute zu erhöhen, beziehungsweise den Ausschuss zu reduzieren. Wie in Figur 2 zu sehen, weist die gemeinsame Platine 18 einen Justierpunkt 42 auf, um sie in der richtigen Lage mit dem Trägerkörper 16 zu verschrauben.
Die Doppellinse 50 selbst wird einstückig in einem Spritzgußverfahren hergestellt und anschließend beschichtet. Die entstehende Doppellinse 50 wird in den Trägerkörper 16 eingesetzt. Die beiden Linsen 24 und 26 liegen wegen der mechanischen Kopplung im Verbindungsbereich 25 automatisch im richtigen Basisabstand zueinander. Der Trägerkörper 16 stellt sicher, dass die Doppellinse 50 in der richtigen Ebene zur Platine 18 liegt. Die Doppellinse 50 wird so in den Trägerkörper 16 eingesetzt, dass die Anschlagpunkte und Anschlagsflächen 52 übereinstimmen, so dass die Doppellinse 50 die richtige Lage zur Referenzfläche 60 hat. Die Positionierzungen 54 drücken die Doppellinse 50 gegen die Referenzfläche 60. In der noch fehlenden Höhenrichtung sorgen Schnapplaschen 55 für die Justierung. Die Doppellinse 50 wird also insgesamt mechanisch ohne jeglichen Aufwand in die richtige Justierlage gezwungen. In dieser Lage wird sie dann endgültig durch einen UV-Kleber fixiert.

Die Erfindung ermöglicht somit ein justagefreies Konzept für den Aufbau eines optoelektronischen Sensors und insbesondere eines Entfernungsmessers. Das optomechanische Design berücksichtigt ohne besondere Justageschritte die gesamte Toleranzkette des Lichtwegs vom Lichtsender bis zum Lichtempfänger.

Man kann die verschiedenen beteiligten Bauteile im optischen System statistisch untersuchen und ihren Anteil an der Empfindlichkeit gegenüber Toleranzen zurückrechnen. Dabei erhält man aus einer großen Vielzahl beitragender Ursachen ein näherungsweise normalverteiltes Erwartungsbild der Position des Lichtempfängers, dessen Standardabweichung in der Größenordnung von 0,5 mm liegt. Erfindungsgemäß kann die Position des Lichtempfängers durch Wahl der Padgeometrie, durch Auflöten auf eine gemeinsame Platine und die weiteren beschriebenen Maßnahmen, genauer festgelegt werden.

Damit ist ein wichtiger Basisabstand festgelegt, nämlich der von Lichtsender zu Lichtempfänger. Der zweite wichtige Basisabstand wird durch die verbundene Doppellinse garantiert. Der Trägerkörper schließlich gewährleistet mit den verschiedenen beschriebenen Maßnahmen die richtige Lage der Doppellinse zum Basis Lichtsender-Lichtempfänger. Damit ist das Gesamtsystem ohne Justage einsatzfähig, insbesondere ohne erforderliche Justierschritte bei der Montage durch den Endbenutzer und es wird auch weniger Ausschuss produziert, weil die Sensoren automatisch richtig justiert sind.

## Patentansprüche

1. Optoelektronischer Sensor (10) mit einem Lichtsender (20) und einem hierzu in festem Abstand (40) angeordneten Lichtempfänger (22) sowie mit einer ersten Linse (24), die dem Lichtsender (20), und mit einer zweiten Linse (26), die dem Lichtempfänger (22) vorgeordnet ist, **dadurch gekennzeichnet, dass** die erste Linse (24) und die zweite Linse (26) miteinander zu einer Doppellinse (50) verbunden sind, um einen festen Abstand zueinander sicherzustellen.

2. Sensor (10) nach Anspruch 1, **dadurch gekennzeichnet, dass** Lichtsender (20) und Lichtempfänger (22) auf einer gemeinsamen Leiterplatte (18) angeordnet sind.

3. Sensor (10) nach Anspruch 2, **dadurch gekennzeichnet, dass** die Geometrie eines Pads der Leiterplatte (18) für den Lichtsender (20) und/oder den Lichtempfänger (22) möglichst klein gewählt ist.

4. Sensor (10) nach einem der vorhergehenden Ansprüche, **dadurch gekennzeichnet, dass** die Doppellinse (50) einstückig, insbesondere ein gemeinsames Spritzteil ist.

5. Sensor (10) nach einem der vorhergehenden Ansprüche, **dadurch gekennzeichnet, dass** die Doppellinse (50) vergütet, also mit einer Beschichtung versehen ist, insbesondere einer Metalloxidschicht.

6. Sensor (10) nach einem der vorhergehenden Ansprüche, **dadurch gekennzeichnet, dass** die erste Linse (24) und die zweite Linse (26) eine gleiche Brennweite aufweisen.

7. Sensor (10) nach einem der vorhergehenden Ansprüche, **dadurch gekennzeichnet, dass** die Verbindung zwischen erster Linse (24) und zweiter Linse (26) aufgeraut und/oder zumindest teilweise mit einem lichtundurchlässigen Material überzogen ist.

8. Sensor (10) nach einem der vorhergehenden Ansprüche, **dadurch gekennzeichnet, dass** ein lichtundurchlässiger Trennsteg (58) zwischen erster Linse (24) und zweiter Linse (26) vorgesehen ist, welcher Öffnungen für die Verbindung (25) der Doppellinse (50) aufweist, wobei die Verbindung (25) insbesondere auf einem lichtundurchlässigen Material (16, 56) aufliegt.

9. Sensor (10) nach Anspruch 8, **dadurch gekennzeichnet, dass** der Trennsteg (58) bis an eine Frontscheibe (14) geführt und mit der Frontscheibe (14) verschweißt oder verklebt ist.

10. Sensor (10) nach einem der vorhergehenden Ansprüche, **dadurch gekennzeichnet, dass** ein Trägerkörper (16) des Sensors (10) den Lichtsender (20) und den Lichtempfänger (22) oder deren Leiterplatte (18) sowie die Doppellinse (50) aufnimmt.

11. Sensor (10) nach Anspruch 10, **dadurch gekennzeichnet, dass** der Trägerkörper (16) die Doppellinse (50) drehfest hält, insbesondere indem eine Referenzfläche (60) der Doppellinse (50) fest an einer Fläche des Trägerkörpers (16) anliegt und der Trägerkörper (16) eine Presskraft (54) auf die Doppellinse (50) gegen die Referenzfläche (60) ausübt.

12. Sensor (10) nach Anspruch 11, **dadurch gekennzeichnet, dass** in dem Trägerkörper (16) Anschlagpunkte (52) und Positionierzungen (54) vorgesehen sind, deren Spannung die eingesetzte Doppellinse (50) in einer vorgegebenen Position gegen die Referenzfläche (60) drückt, und/oder mindestens eine flexible Schnapplasche (55) die Doppellinse (50) zusätzlich in einer Höhenrichtung festlegt.

13. Sensor (10) nach einem der vorhergehenden Ansprüche, **dadurch gekennzeichnet, dass** der Sensor (10) ein Entfernungsmesser ist, der eine Entfernung zu einem Objekt (36) aus der Lichtlaufzeit von dem Objekt reflektierten oder remittierten Lichts (36) des Lichtsenders (20) zu dem Lichtempfänger (22) bestimmen kann.

14. Verfahren zu Herstellung eines optoelektronischen Sensors (10) mit einem Lichtsender (20) und einem hierzu in festem Abstand (40) angeordneten Lichtempfänger (22) sowie mit einer ersten Linse (24), die dem Lichtsender (20) und mit einer zweiten Linse (26), die dem Lichtempfänger (22) vorgeordnet ist, das folgende Schritte aufweist:
- Aufkleben des Lichtsenders (20) auf eine Leiterplatte (18),
- Löten des Lichtempfängers (22) auf die Leiterplatte (18) in fest vorgegebenem Abstand (40) und
- Herstellen der ersten Linse (24) und der zweiten Linse (26) als verbundene Doppellinse (50).

15. Verfahren nach Anspruch 14, **dadurch gekennzeichnet, dass** die Doppellinse (50) als einstückiges Spritzteil gegossen wird.

16. Verfahren nach Anspruch 14 oder 15, **dadurch gekennzeichnet, dass** die Leiterplatte (18) auf einen Trägerkörper (16) geschraubt und die Doppellinse (50) in den Trägerkörper (16) eingesetzt wird.

17. Verfahren nach Anspruch 16, **dadurch gekennzeichnet, dass** die Doppellinse (50) in einer Ebene des Trägerkörpers (16) mit Anschlagpunkten (52) an einer Referenzfläche (60) ausgerichtet und mit Positionierzungen (54) gegen die Referenzfläche (60) gedrückt wird und/oder in einer Höhenrichtung mit mindestens einer Schnapplasche (55) festgelegt und anschließend in der so justierten Lage fixiert wird, insbesondere mit einem UV-Klebstoff.

18. Verfahren nach Anspruch 16 oder 17, **dadurch gekennzeichnet, dass** eine gemeinsame Frontscheibe (14) des Sensors (10) für Lichtaustritt aus dem Lichtsender (20) und Lichteintritt zu dem Lichtempfänger (22) zunächst auf Richtungsgeber (62, 63) eines Trennstegs (58) des Trägerkörpers (16) aufgelegt und später das Material der Richtungsgeber (62, 63) mit der Frontscheibe (14) ultraschallverschweißt wird, um eine optisch dichte Verbindung zwischen Trennsteg (58) und Frontscheibe (14) zu schaffen.
